# EUROPÄISCHE PATENTSCHRIFT

(11) **EP 0 667 612 B1**
(45) Veröffentlichungstag und Bekanntmachung des Hinweises auf die Patenterteilung: **07.06.2000**
(21) Anmeldenummer: 95200284.8
(22) Anmeldetag: 07.02.1995
(51) Int. Cl.: G11B 15/44

(54) **Vorrichtung an dem reversierenden Laufwerk eines Magnetbandkassettengerätes**
Device for the reverse play drive of a magnetic tape drive apparatus
Dispositif pour l'entraînement reversible d'un appareil à bande magnétique

(30) Priorität: 15.02.1994 DE 4404687
(43) Veröffentlichungstag der Anmeldung: 16.08.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Kunze, Norbert, c/o Philips Corp.Intel.Prop.GmbH, D-52064 Aachen (DE); Müller, Dieter, c/o Philips Corp.Intel.Prop.GmbH, D-52064 Aachen (DE)
(74) Vertreter: von Laue, Hanns-Ulrich, Dipl.-Ing.

(56) Entgegenhaltungen:
- EP-A- 0 353 815
- DE-A- 3 312 134
- DE-A- 4 017 434

## Beschreibung

Die Erfindung bezieht sich auf eine Vorrichtung an dem reversierenden Laufwerk eines Magnetbandkassettengerätes gemäß dem Oberbegriff von Anspruch 1.

Die Offenlegungsschrift DE - A - 40 17 434 stellt ein Wiedergabegerät für Magnetbandkassetten vor, wobei der Kopf nicht drehbar, sondern starr an der Kopfplatte befestigt ist. Die Kopfplatte selbst läßt sich nicht drehen, sondern nur in Richtung des Bandes und zurück verschieben.

Aus der Patentschrift DE - C - 33 12 134, die die Merkmale aus dem Oberbegriff von Anspruch 1 enthält, ist ein reversierendes Laufwerk dieser Art bekannt. Bei diesem reversierenden Laufwerk erfolgt die Festlegung der Laufrichtung mittels einer Leitschlitzanordnung in einer Steuerplatte, die in Bandlaufrichtung hin und her verschiebbar ist und beim Vor- und Zurückfahren der Trägerplatte zwischen der Spielstellung und der Standby-Stellung der Trägerplatte die Kipprichtung vorgibt.

An der Trägerplatte ist der Magnetkopf starr befestigt. Der Magnetkopf dreht deshalb zusammen mit den beiden an ihm befestigten Bandführungs-Elementen, die dadurch in Abhängigkeit von der Wiedergaberichtung einen wechselnden Kontakt zum Tonband haben. Es ist erwiesen, daß ein mit vier Bandführungen ausgestattetes Laufwerk verbesserte Bandlaufeigenschaften besitzt. Verschwenkt bei einem Laufwerk der Tonkopf mit diesen vier Bandführungen mit der drehenden Trägerplatte, so ist die verbessernde Wirkung der vier Bandführungen nicht gegeben.

Es ist Aufgabe der Erfindung, eine Vorrichtung der eingangs erwähnten Art zu schaffen, bei der trotz drehender Trägerplatte die Wirkung der vier Bandführungs-Elemente erhalten bleibt und zusätzlich die Magnetspalte im Kopfspiegel des Magnetkopfes bei jeder Schwenklage von der Kopfspiegelmitte hin stets in gleicher Lage sind.

Die gestellte Aufgabe ist erfindungsgemäß dadurch gelöst, daß der Magnetkopf an der Trägerplatte um deren Schwingachse drehbar gelagert ist und Geradführungen vorgesehen sind, die den Magnetkopf unabhängig von der Schwenkstellung der Trägerplatte stets senkrecht zu dem zwischen den Tonwellen gespannten Band führen.

Da die Stellung des Magnetkopfes von der Geradführung und nicht mehr von der Schwenkstellung der Trägerplatte abhängt, ist eine optimale Berührung zwischen Magnetband Magnetkopf und Bandführungs-Elementen gewährleistet.

Nach einer weiteren Ausgestaltung der Erfindung ist vorgesehen, daß eine Geradführung aus einer senkrecht zum Magnetband verlaufenden chassisfesten Nut besteht, in der ein Stift eines den Magnetkopf auf der Trägerplatte lagernden Kopfhalters geführt ist. Eine derartige Geradführung kann in einen Bereich verlegt sein, der von anderen Bauteilen nicht benötigt wird.

Nach einer weiteren Ausgestaltung der Erfindung ist vorgesehen, daß eine andere Geradführung des Magnetkopfes chassisfeste Führungsstifte aufweist, die bei in die Spielstellung fahrendem Magnetkopf in Fangschlitze des Kopfhalters einfallen und dem Magnetkopf eine Höhen- Seitenführung geben.

Nach einer weiteren Ausgestaltung der Erfindung ist vorgesehen, daß an dem Kopfhalter Kanten vorgesehen sind, mit denen er gegen chassisfeste Anschläge fährt, wodurch es zu einer Verkeilung und damit zu einer spielfreien Positionierung des Kopfhalters/Tonkopfes im Laufwerk zwischen dem Chassis und dem Kopfhalter kommt.

Die Erfindung wird anhand der Zeichnungen näher erläutert. Es zeigen:
Fig. 1 ein Teil eines Laufwerkes eines Magnetbandkassettengerätes mit einer den Magnetkopf führenden Trägerplatte in der Standby-Stellung,
Fig. 2 das Laufwerk mit Trägerplatte und Magnetkopf in der Spielstellung bei einer ersten Bandlaufrichtung,
Fig. 3 das Laufwerk mit Trägerplatte und Magnetkopf in der Spielstellung in einer zweiten gegenläufigen Bandlaufrichtung,
Fig. 4 das Laufwerk mit Trägerplatte und Magnetkopf in einer Schnellaufstellung, bei der das Magnetband nur leicht abgetastet wird,
Fig. 5 bis 7 vergrößerte Ansichten des Wirkungsmechanismus von Geradführungen in Magnetkopfnähe, wobei

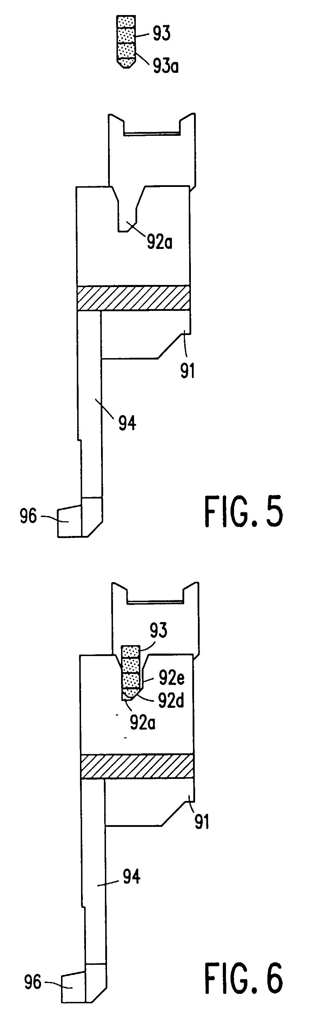

Fig. 5 das Zusammenwirken in der Standby-Stellung,
Fig. 6 das Zusammenwirken in der Spielstellung und

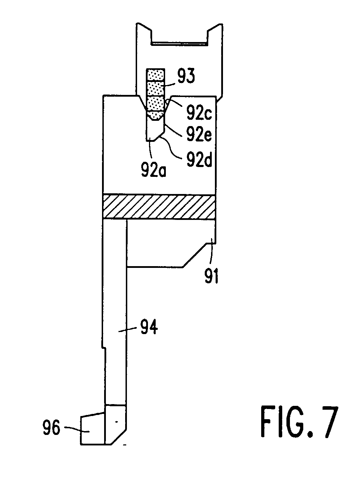

Fig. 7 das Zusammenwirken in der Schnellaufstellung zeigen.

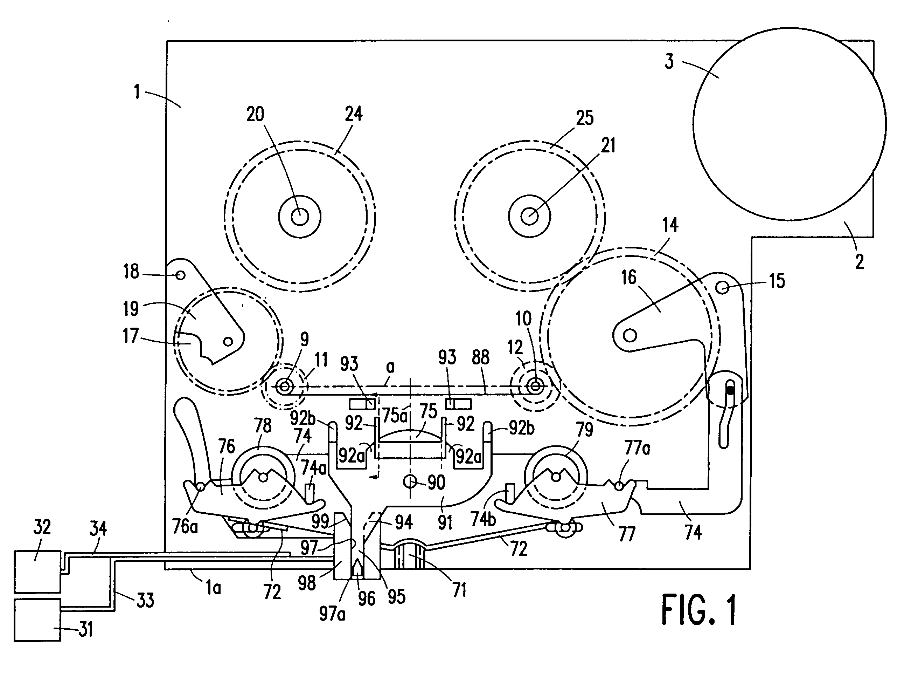

Das Magnetbandkassettengerät weist, wie in Fig. 1 dargestellt, ein Gestell 1 auf, das über eine Stütze 2 einen nur in einer Richtung umlaufenden Antriebsmotor 3 trägt. Ein Antriebsritzel des Motors 3 führt eine Pese, die nicht dargestellte Schwungräder über Umlenkrollen derart führt, daß die Schwungräder gegensinnig drehen. Die Schwungräder sind im Gestell 1 gelagert. Eine der Schwungscheiben ist fest mit einer ersten Tonwelle 9 und die andere Schwungscheibe ist fest mit einer zweiten Tonwelle 10 verbunden. Weiterhin ist die eine Schwungscheibe mit einem Zahnrad 11 verbunden; die andere Schwungscheibe ist mit einem Zahnrad 12 verbunden. Über eine Rutschkupplung ist koaxial zu dem Zahnrad 12 ein weiteres Zahnrad auf der Schwungscheibe der Tonwelle 10 drehbar angeordnet, welches ständig kämmend mit einem als Zahnrad ausgebildeten Schaltrad 14 in Eingriff ist. Dieses Schaltrad 14 ist schwenkbar um eine Achse 15. Die Achse 15 trägt einen in Fig. 1 schematisch dargestellten Schwenkarm 16, auf dem drehbar das Schaltrad 14 gelagert ist. In ähnlicher Weise kämmt mit dem Zahnrad 11 ständig ein Zahnrad 17. Dieses Zahnrad 17 ist drehbar um eine Schwenkachse 18 mittels eines schematisch dargestellten Schwenkarmes 19.

Wie Fig. 1 zeigt, sind drehbar im Gestell 1 Wickeldorne 20 und 21 gelagert. Diese Wickeldorne 20 und 21 sind fest mit Spulrädern verbunden. Über Rutschkupplungen sind die Wickeldorne 20, 21 mit Spielrädern 24, 25 verbunden.

Zum schnellen Vor- und Rücklauf sind zwei Tasten 31 und 32 angedeutet, die über Tastenstangen 33 und 34 auf nicht dargestellte Weise den Vor- und Rücklauf bewirken können.

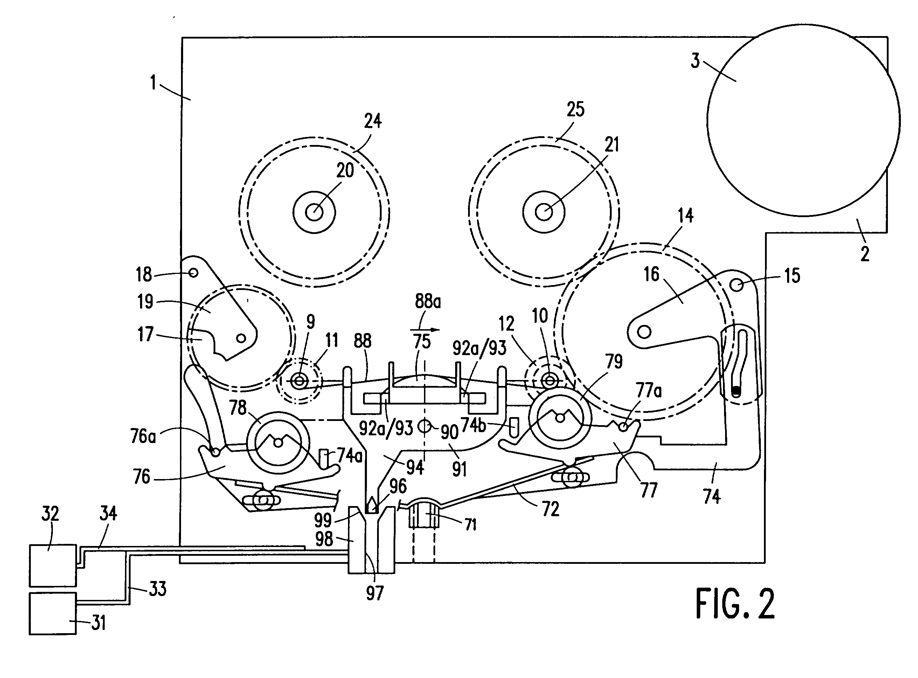

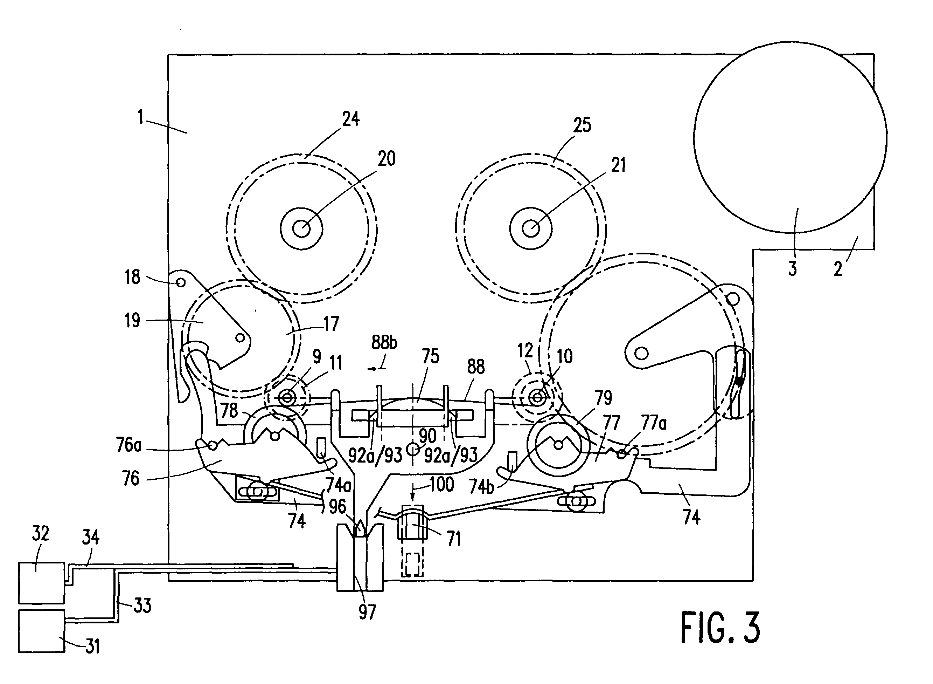

Es ist ein Nocken 71 vorgesehen, der auf eine Blattfeder 72 einwirken kann. Mit Hilfe des Nockens 71 und der Blattfeder 72 kann eine Trägerplatte 74 für einen Tonkopf 75 gegen ein Magnetband 76 verfahren werden. Die Blattfeder 72 drückt mit ihren freien Enden dazu gegen Halterungen 76 und 77, an denen je eine Andruckrolle 78 und 79 gelagert ist. Die Halterungen werden gegen Anschläge 74a, 74b sowie 76a und 77a der Trägerplatte 74 gedrückt. Wie die Fig. 2 und 3 zeigen, kann die Trägerplatte 74 um eine Schwingachse 90 Schwenken. Dieses Schwenken erfolgt mittels einer nicht dargestellten Steueranordnung.

Auf der Schwingachse 90 ist drehbar ein Kopfhalter 91 gelagert, der damit gegenüber der Trägerplatte 74 verschwenken kann. Auf den Kopfhalter 91 ist der Magnetkopf 75 beispielsweise durch Aufclipsen genau lageorientiert aufgesetzt. Beiderseits des Magnetkopfes 75 befinden sich innere Bandführungen 92 und weiter außen gelegene Bandführungen 92b. Die innen gelegenen Bandführungen 92 sind seitlich mit Fangschlitzen 92a versehen, in die Führungsstifte 93 eingleiten können, wenn der Kopfhalter 91 mit dem Magnetkopf 75 in Richtung auf das Magnetband 88 verschoben wird. Die Führungsstifte 93 bilden zusammen mit den Fangschlitzen 92a Geradführungen unmittelbar im Bereich der Berührung von Magnetband 88 und Magnetkopf 75.

Der Kopfhalter 91 ist mit einem Führungsarm 94 versehen, der an seinem freien Ende 95 einen Stift 96 trägt. Dieser Stift 96 gleitet im Bereich einer chassisfesten Nut 97, die sich zwischen Leitleisten 98 ausbildet. Die chassisfeste Nut 97 ist zum Rand la des Gestells 1 hin von gleichbleibender Breite und kann in diesem Bereich gleichbleibender Breite den Stift 96 genau führen. Die Nut 97 verläuft senkrecht zu einer Verbindungslinie a zwischen den Tonwellen 9 und 10 und damit auch senkrecht zu dem zwischen den Tonwellen 9 und 10 gespannten Magnetband 88. Beim Verschieben der Trägerplatte 74 und Schwingachse 90 senkrecht zu dem Magnetband 88 sichert der in der Nut 97 gleitende Stift 96 damit stets eine Kopfstellung 75, die senkrecht zum Magnetband 88 bzw. der Linie a verläuft. Die Nut 97 öffnet sich in Richtung auf das Magnetband 88 und die Linie a zu einem Trichter 99. Dessen Bewandnis ist in Fig. 2 bis 4 näher erläutert.

Die Fig. 1 zeigt die Standby-Stellung des Laufwerkes, wobei die Trägerplatte 74 den Magnetkopf 75 deutlich aus dem Wirkbereich des Magnetbandes 88 herausgeführt hat. In dieser Stellung befindet sich der Stift 96 im unteren Endbereich 97a der chassisfesten Nut 97. Der Kopfhalter 91 ist über den Stift 96 in diesem Fall sicher geführt, und die Mittellinie 95a des Magnetkopfes steht eindeutig senkrecht auf der Linie a.

Fig. 2 zeigt eine Stellung des Laufwerkes, wobei das Magnetband 88 in einer ersten Bandlaufrichtung bewegt wird, die durch einen Pfeil 88a markiert ist. Die Trägerplatte 74 ist mit dem Kopfhalter 91 in Richtung auf das Band 88 vorgefahren, und das Band 88 ist in die Bandführungen 92, 92b eingelaufen; es liegt am Tonkopf 75 an. Nun sind die Führungsstifte 93 in die Fangschlitze 92a eingelaufen und geben dem Kopfhalter 91 unmittelbar in der Nähe des Kopfes 75 ein Geradführung vor. Der Kopfhalter 91 liegt dabei mit den Schrägen 92d (Fig. 6) an den Führungsstiften 93 an und wird dadurch parallel zum Band ausgerichtet. Um Irritationen zwischen dieser Geradführung und der zwischen den Leitleisten 98 zu vermeiden, hat der Führungsarm 94 nunmehr die Nut 97 verlassen und ist in den trichterförmig aufgeweiteten Bereich 99 eingelaufen, in dem der Stift 96 in der Nut 97 nicht mehr geführt ist. Bei dieser ersten Laufrichtung liegt die Andruckrolle 79 an der Tonwelle 10 an. Der Halter 77 hat sich wegen des Andruckes von dem Anschlag 74b abgehoben.

Zur Änderung der Bandlaufrichtung wird die Trägerplatte 74 zurückgefahren in Richtung eines Pfeiles 100 (Fig. 3), und die Steueranordnung sorgt dafür, daß die Schwenkrichtung der Trägerplatte 74 umgekehrt wird. Die Umsteuerung der Schwenkrichtung wird durch die nicht dargestellte Steueranordnung bewirkt. Ist die Trägerplatte 74 zurückgefahren, dann wird der Stift 96 wieder in der Nut 97 geführt. Beim erneuten Vorfahren in Richtung auf das Magnetband 88 verläßt der Stift 96 wieder die Nut 97, während zugleich die Führungsstifte 93 in die Fangschlitze 92a einlaufen. Die Geradführung ist dabei wieder von den Leitleisten 98 am Rand la des Gestells 1 in die unmittelbare Nähe des Tonkopfes 75 gerückt. Bei der Darstellung nach Fig. 3 drückt die Andruckrolle 78 gegen die Tonwelle 9, und das Magnetband wird nun in Richtung eines Pfeiles 88b in Gegenrichtung nach links über den Magnetkopf 75 hinweggezogen. Infolge des Andrückens der Andruckrolle 78 an die Tonwelle 9 hat sich der Halter 76 von dem Anschlag 74a abgehoben.

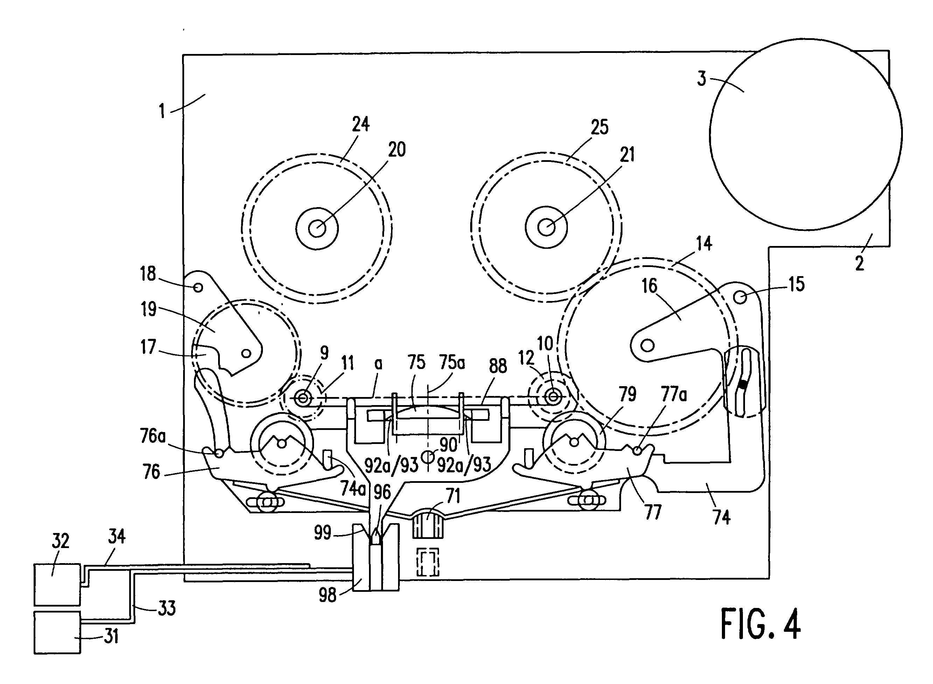

Fig. 4 zeigt eine Schnellaufstellung, bei der das Magnetband 88 den Tonkopf 75 gerade leicht berührt. In dieser Stellung befindet sich der Stift 96 gerade noch im parallelen Führungsbereich der Nut 97. Die Geradführung im Bereich der Leitleisten 98 ist damit noch gegeben, die Geradführung im Bereich der Führungsstifte 93 mit den Fangschlitzen 92a ist auch noch wirksam. Die Halterung 91 mit dem Tonkopf 75 ist also immer noch so geführt, daß der Magnetkopf 75 mit seiner Mittellinie 75a senkrecht auf der Laufrichtung des Magnetbandes 88 steht. Lediglich der Anschlag 92d (Fig. 6) ist nicht mehr wirksam.

Auf diese Weise ist sichergestellt, daß der Tonkopf immer seine optimale Stellung gegenüber dem Magnetband 88 einnimmt, ganz gleich ob die Trägerplatte 74 gegenüber der Bandlaufrichtung verschwenkt oder nicht.

Fig. 5 zeigt den Kopfhalter vergrößert und in einem Schnitt zur besseren Darstellung des Zusammenwirkens der Führungsstifte 93 und Fangschlitze 92a. In Fig. 1 ist die Trägerplatte 74 zusammen mit dem Kopfhalter 91 in ihre Standby-Stellung zurückgefahren. Dabei liegen die Fangschlitze 92a und die Führungsstifte 93 weit auseinander. Dies zeigt vergrößert Fig. 5. Fährt nun die Trägerplatte 74 zusammen mit dem Kopfhalter 91 in die Spielstellung, und zwar ganz gleich, ob für die erste oder zweite Bandlaufrichtung, dann sind die Fangschlitze 92a auf die Führungsstifte 93 aufgefahren. Diese Stellung ist in Fig. 6 dargestellt, in der die oberen Geradführungen 92a/93 und der Anschlag 92d die Stellung des Magnetkopfes 75 genau definieren.

Fig. 7 zeigt die Zwischenstellung für den Schnellauf, wie sie in Fig. 4 dargestellt ist. In diesem Fall sind die Fangschlitze 92a ein Stück zurückgefahren. Die Führung der Fangschlitze 92a ist noch gewährleistet, da die Wand 93a des Stiftes 93 noch in Kontakt mit der Nutwand 92e steht.

## Patentansprüche

1. Reversierendes Laufwerk eines Magnetbandkassettengerätes, bei dem das Magnetband (88) an wenigstens einem Aufnahme- bzw. Wiedergabemagnetkopf (75) vorbeigeführt wird, der an einer Trägerplatte (74) angeordnet ist, die um eine Schwingachse (90) Schwenkbar und außerdem gegenüber dem Magnetband (88) verfahrbar ist, wobei infolge eines gesteuerten Verschwenkens jeweils eine von zwei an der Trägerplatte (74) angeordneten Andruckrollen (78, 79) gegen die zugehörige Tonwelle (9, 10) fahrbar ist, wodurch die Bandlaufrichtung bestimmt wird,
dadurch gekennzeichnet,
daß der Magnetkopf (75) an der Trägerplatte (74) um deren Schwingachse (90) drehbar gelagert ist und Geradführungen (92a/93; 96/97) vorgesehen sind, die den Magnetkopf (75) unabhängig von der Schwenkstellung der Trägerplatte (74) stets senkrecht zu dem zwischen den Tonwellen gespannten Band (88) führen.

2. Laufwerk nach Anspruch 1, dadurch gekennzeichnet, daß eine Geradführung aus einer senkrecht zum Magnetband (88) verlaufenden chassifesten Nut (97) besteht, in der ein Stift (96) eines den Magnetkopf (75) auf der Trägerplatte (74) lagernden Kopfhalters (91) geführt ist.

3. Laufwerk nach Anspruch 1 oder 2,
dadurch gekennzeichnet,
daß eine Geradführung des Magnetkopfes (75) chassifeste Führungsstifte (93) aufweist, die bei in die Spielstellung fahrendem Magnetkopf (75) in Fangschlitze (92a) eines Kopfhalters (91) einfallen und dem Magnetkopf eine Höhen-Seitenführung geben.

4. Laufwerk nach Anspruch 1,
dadurch gekennzeichnet,
daß an einem Kopfhalter (91) Kanten (92a) vorgesehen sind, mit denen er gegen chassisfeste Anschläge fährt, wodurch es zu einer Verkeilung und damit zu einer spielfreien Positionierung des Kopfhalters (91)/Magnetkopfes (75) im Laufwerk zwischen dem Chassis (1) und dem Kopfhalter (91) kommt.

## Claims

1. A reverse drive of a magnetic tape cassette apparatus in which the magnetic tape (88) is passed along at least one magnetic recording/playback head (75) which is arranged on a support plate (74), which plate is pivotable about a pivot axis (90) and is in addition displaceable relative to the magnetic tape (88), such that either of two pressure rollers (78,79) arranged on the support plate (74) can be driven against the associated capstan (9, 10) as a result of a controlled pivoting movement, whereby the tape movement direction is defined, characterized in that the magnetic head (75) is journalled on the support plate (74) with rotation possibility about the pivot axis (90) thereof, and straight guides (92a/93 ; 96/97) are provided which guide the magnetic head (75) perpendicularly to the magnetic tape (88) tensioned between the capstans at all times independently of the pivotal position of the support plate (74).

2. A drive as claimed in Claim 1, characterized in that one straight guide comprises a groove (97) which extends perpendicularly to the magnetic tape (88) and is fixed relative to the frame, in which groove a pin (96) of a head support (91) is guided, which head support journals the magnetic head (75) on the support plate (74).

3. A drive as claimed in Claim 1 or 2, characterized in that another straight guide of the magnetic head (75) comprises guide pins (93) fixed relative to the frame, which pins enter retaining slots (92a) of a head support (91) when the magnetic head (75) enters the playback position and provide the magnetic head with a lateral level guidance.

4. A drive as claimed in Claim 1, characterized in that a head support (91) comprises edges (92a) with which it bears on abutment stops fixed relative to the frame, whereby a wedging effect is achieved and thus a play-free positioning of the head support(91)/magnetic head (75) in the drive between the frame (1) and the head support (91).

## Revendications

1. Entraînement réversible d'un appareil à bande magnétique dans lequel la bande magnétique (88) est avancée sur au moins une tête magnétique d'enregistrement ou de lecture (75) qui est disposée sur une plaque de support (74) qui peut pivoter autour d'un axe de pivotement (90) et se déplacer par rapport à la bande magnétique (88), l'un des deux galets de pression (78, 79) disposés sur la plaque de support (74) étant respectivement déplacé contre le cabestan correspondant (9, 10) en raison d'un pivotement commandé, le sens d'avance de la bande étant déterminé,
caractérisé en ce
que la tête magnétique (75) est logée à rotation sur la plaque de support (74) autour de son axe de pivotement (90) et qu'il est prévu des glissières droites (92a, 93 ; 96/97) qui guident toujours la tête magnétique (75) perpendiculairement à la bande (88) tendue entre les cabestans indépendamment de la position de pivotement de la plaque de support (74)

2. Entraînement selon la revendication 1,
caractérisé en ce
qu'une glissière droite se compose d'une rainure (97) fixée au châssis s'étendant perpendiculairement à la bande magnétique (88) dans laquelle est guidée une broche (96) d'un support de tête (91) logeant la tête magnétique (75) sur la plaque de support (74).

3. Entraînement selon l'une des revendications 1 ou 2,
caractérisé en ce
qu'une glissière droite de la tête magnétique (75) présente des broches de guidage (93) fixées au châssis qui s'insèrent dans des fentes de logement (92a) d'un support de tête (91) lorsque la tête magnétique (75) passe en position de lecture et donnent à la tête un guidage latéral et vertical.

4. Entraînement selon la revendication 1,
caractérisé en ce
que des bords (92a) sont prévus sur un support de tête (91) et lui permettent d'accoster contre des butées fixées au châssis si bien qu'il se produit un clavetage et, dès lors, un positionnement exempt de jeu du support de tête (91)/de la tête magnétique (75) dans l'entraînement entre le châssis (1) et le support de tête (91).
